# EUROPEAN PATENT SPECIFICATION

(11) **EP 1 709 115 B1**
(45) Date of publication and mention of the grant of the patent: **25.04.2007**
(21) Application number: 04815825.7
(22) Date of filing: 30.12.2004
(51) Int. Cl.: C08K 9/06, C08K 7/28, C08K 5/09

(54) **FILLED COMPOSITE**
GEFÜLLTER VERBUNDWERKSTOFF
COMPOSITE CHARGE

(30) Priority: 30.12.2003 US 533348 P
(43) Date of publication of application: 11.10.2006
(73) Proprietor: 3M Innovative Properties Company, St. Paul, MN 55133-3427 (US)
(72) Inventor: D'SOUZA, Andrew, S., Saint Paul, Minnesota 55133-3427 (US)
(74) Representative: Voortmans, Gilbert J.L.
(86) International application number: PCT/US2004/043827
(87) International publication number: WO 2005/066262

(56) References cited:
- EP-A- 0 336 780
- EP-A- 0 436 198
- EP-A- 0 508 303
- GB-A- 1 110 930
- US-A- 3 769 126
- US-A- 5 597 522

## Description

### Priority and Cross-Reference Claim

This application claims priority to U.S. Provisional Application No. 60/533,348, filed December 30, 2003.

### Field of Invention

The present invention relates to a filled thermoplastic resin composite.

### Background

It is well known to incorporate fillers into thermoplastic resin compositions to adjust the physical properties of the resultant compositions (often referred to as "composites" or "filled composites") such as reduce the density thereof, or reduce cost by reducing the proportion of relatively expensive resin with cheaper materials. Examples of known fillers include solid particulates such as titanium dioxide, glass, etc. It has also been known to use hollow particles such as hollow glass bubbles. Although glass bubbles have often been used to successfully reduce density of the final composite, in many cases the glass bubbles are crushed during manipulation of the composite, thereby impairing the desired reduction in density. Also, resin composites containing glass bubbles have often exhibited undesirable loss of desired physical properties such as tensile strength. It is well known that adding non-reinforcing fillers to polymers will result in a decrease in the mechanical strength (tensile, impact, etc.) of that polymer composition. Non-reinforcing fillers can be defined as any particle with an aspect ratio (length over diameter) less than 2. It is assumed that the loss in mechanical strength is due primarily to the filler causing a disruption of the polymer chains and also due to the inefficient bonding between the polymer and the filler; where the bond strength is assumed to be less than the tensile strength of the polymer chains themselves.

Illustrative examples of filled resin composites are disclosed in U.S. Patent No. 3,769,126 (Kolek), 4,243,575 (Myers et al.), 4,923,520 (Anzai et al.), and 5,695,851 (Watanabe et al.) and EP Application No. 1,142,685 (Akesson).

### Summary of Invention

The present invention provides a filled thermoplastic resin composite. Composites of the invention provide a surprising combination of tensile strength and reduced weight. The improved properties provided by composites of the invention enables use of filled thermoplastic resin composites in product applications not otherwise possible.

In brief summary, in a typical embodiment a composite of the invention comprises a thermoplastic olefin, e.g., polypropylene, polyethylene, polybutylene, polystyrene, and copolymers thereof, containing maleic anhydride and glass bubbles. Preferably the glass bubbles have been treated with at least one of a silane coupling agent or titanate coupling agent, e.g., aminosilanes such as aminopropyltriethoxysilane ("APS") or N-2-(aminoethyl)-3-amino propyltrimethoxysilane, prior to incorporation into the composite.

Typically the glass bubbles should exhibit a crush strength of at least 3,000 PSI to withstand many extrusion operations. In some embodiments, they will preferably exhibit a crush strength of at least 18,000 PSI to withstand injection molding as well as extrusion operations. The strength of the glass bubbles is typically measured using ASTM D3102-72; "Hydrostatic Collapse Strength of Hollow Glass Microspheres".

The present invention may be used with commercially available glass bubble fillers for use in resin composites. Preferably, the bubbles are of the high strength variety such as Scotchlite^{™} Glass Bubbles S60HS which are soda-lime-borosilicate glass. These bubbles exhibit an isostatic crush strength of 18,000 psi, density of 0.60 g/cc, and average diameter of about 30 microns.

Articles can be made with composites of the invention by injection molding, extrusion, and other known methods for forming articles from thermoplastic polymers.

### Examples

The invention will be further explained by the following illustrative examples which are intended to be non-limiting. Unless otherwise indicated, all amounts are expressed in parts by weight.

Unless otherwise indicated, the following preparation and test methods were used.

### Test Methods

### Tensile Modulus

Tensile Modulus was determined following ASTM Test Method D-638 and is reported in Mpa.

### Ultimate Tensile Modulus

Ultimate Tensile Modulus was determined following ASTM Test Method D-638 and is reported in Mpa.

### Flexural Modulus

Flexural Modulus was determined following ASTM Test Method D-790 and is reported in Mpa.

### Ultimate Flexural Strength

Ultimate Flexural Strength was determined following ASTM Test Method D-790 and is reported in Mpa.

### Elongation at Break

Elongation at Break was determined following ASTM Test Method D-638 and is reported as %.

### Notched Izod Impact Strength

Notched Izod Impact Strength was determined following ASTM Test Method D-256 and is reported in J/cm.

### Density

A fully automated gas displacement pycnometer obtained under the trade designation "ACCUPYC 1330 PYCNOMETER" from Micromeritics, Norcross, Georgia, was used to determine the density of the injection molded composite material according to ASTM D-2840-69, "Average True Particle Density of Hollow Microspheres".

### Silane Treatment of Glass Bubbles

A Ross Mixer (available from Charles Ross & Son Company Hauppauge, NY) was charged with a solution of N-2-(aminoethyl)-3-amino propyltrimethoxysilane (1500 g; 0.5% by wt; available from Osi Specialties, Albany, NY under the trade designation "A1120"). Glass Bubbles (Available from 3M Company, St. Paul, MN under the trade designation "S60HS") were slowly added under medium mix speed, and the mixture was allowed to mix for 15 minutes. The ensuing paste was poured into aluminum pans and dried overnight in a forced air oven at 80°C.. The dried glass bubbles were screened through a 180 micron screen to remove any clumps.

### Compounding and Molding of Polypropylene Composites

A twin screw extruder (Berstorff Ultra Glide; screw diameter 25mm; length to diameter ratio was 36:1; screw speed ranged from 200-250 rpm; temperature set points ranged from 200°F-575°F (93°C-302°C), while the actual values range from 148°F-575°F (64°C-302°C); throughput was 10 lbs/hr(4.5 Kg/hr)) equipped with side feeders for glass bubbles, and pelletizer accessories was charged with polypropylene (available from AtoFina, under the trade designation "FINA 3825"; melt index 30g/10m at 230°C, Tₘ of 165 °C, and a density of 0.905 g/cm³) and maleic anhydride (from Crompton Corporation, Middlebury, CT, under the trade Designation "POLYBOND 3200"). Test samples were molded on an injection molding machine (150 ton Engel Injection Molding Machine; with an ASTM four cavity mold) with a screw diameter of 30 mm and injection pressure maintained below 18,000 psi (124 MPa).

**Table 1. Mechanical Properties**

| | Example | | | |
|---|---|---|---|---|
| | 1 | 2 | 3 | 4 |
| "A1120" treatment | No | No | No | yes |
| "FINA 3825" wt % | 100 | 80 | 78 | 78 |
| "POLYBOND 3200" wt % | --- | --- | 2 | 2 |
| "S60HS" wt % | --- | 20 | 20 | 20 |
| Mechanical Properties | | | | |
| Density (g/cc) | 0.9 | 0.8 | 0.8 | 0.8 |
| UltimateTensile Strength (Mpa) | 29.2 | 15.6 | 24.3 | 29.5 |
| Flex Modulus (Mpa) | 1581 | 2264 | 2381 | 2444 |
| Ultimate Flex Strength (Mpa) | 47.7 | 34.8 | 54.5 | 58.5 |
| Elongation at Break (%) | --- | 4.7 | 4.0 | 5.9 |
| Notched Izod Impact Strength (J/cm) | 7.8 | 1.4 | 2.6 | 2.7 |

| | | | | |
|---|---|---|---|---|
| --- means none added or not measured | | | | |

## Claims

1. A filled thermoplastic resin composite comprising at least one thermoplastic olefin, maleic anhydride, and glass bubbles.

2. The composite of claim 1 wherein said glass bubbles have been treated with at least one of a silane coupling agent or titanate coupling agent.

3. The composite of claim 2 wherein said silane coupling agent is an aminosilane.

4. The composite of claim 3 wherein said silane coupling agent is selected from aminopropyltriethoxysilane and N-2-(aminoethyl)-3-amino propyltrimethoxysilane.

5. The composite of claim 1 wherein said glass bubbles exhibit a crush strength of at least 3,000 PSI.

6. The composite of claim 1 wherein said glass bubbles exhibit a crush strength of at least 18,000 PSI.

7. The composite of claim 1 wherein said thermoplastic olefin is selected from the group consisting of polypropylene, polyethylene, polybutylene, polystyrene, and copolymers thereof.

8. An article comprising the composite of claim 1.

## Patentansprüche

1. Gefüllter Thermoplastharz-Verbundwerkstoff, umfassend mindestens ein thermoplastisches Olefin, Maleinsäureanhydrid und Glaskugeln.

2. Verbundwerkstoff nach Anspruch 1, wobei die Glaskugeln mit mindestens einem von einem Silan-Haftvermittler oder einem Titanat-Haftvermittler behandelt worden sind.

3. Verbundwerkstoff nach Anspruch 2, wobei der Silan-Haftvermittler ein Aminosilan ist.

4. Verbundwerkstoff nach Anspruch 3, wobei der Silan-Haftvermittler aus Aminopropyltriethoxysilan und N-2-(Aminoethyl)-3-aminopropyltrimethoxysilan ausgewählt ist.

5. Verbundwerkstoff nach Anspruch 1, wobei die Glaskugeln eine Quetschfestigkeit von mindestens 3.000 PSI aufweisen.

6. Verbundwerkstoff nach Anspruch 1, wobei die Glaskugeln eine Quetschfestigkeit von mindestens 18.000 PSI aufweisen.

7. Verbundwerkstoff nach Anspruch 1, wobei das thermoplastische Olefin aus der Gruppe ausgewählt ist, die aus Polypropylen, Polyethylen, Polybutylen, Polystyrol und Copolymeren davon besteht.

8. Gegenstand, umfassend den Verbundwerkstoff nach Anspruch 1.

## Revendications

1. Composite chargé en résine thermoplastique, comprenant au moins une oléfine thermoplastique, un anhydride maléique, et des sphères creuses en verre.

2. Composite selon la revendication 1, dans lequel lesdites sphères creuses en verre ont été traitées avec l'un au moins d'un agent de pontage de la classe des silanes ou d'un agent de pontage de la classe des titanates.

3. Composite selon la revendication 2, dans lequel ledit agent de pontage de la classe des silanes est un aminosilane.

4. Composite selon la revendication 3, dans lequel ledit agent de pontage de la classe des silanes est sélectionné parmi l'aminopropyltriéthoxysilane et le N-2-(aminoéthyl)-3-aminopropyltriméthoxysilane.

5. Composite selon la revendication 1, dans lequel lesdites sphères creuses en verre présentent une résistance à l'écrasement d'au moins 3 000 livres par pouce carré (psi).

6. Composite selon la revendication 1, dans lequel lesdites sphères creuses en verre présentent une résistance à l'écrasement d'au moins 18 000 livres par pouce carré (psi).

7. Composite selon la revendication 1, dans lequel ladite oléfine thermoplastique est sélectionnée dans le groupe constitué du polypropylène, du polyéthylène, du polybutylène, du polystyrène, et de copolymères de ceux-ci.

8. Article comprenant le composite selon la revendication 1.
